# EUROPÄISCHE PATENTSCHRIFT

(11) **EP 2 657 409 B1**
(45) Veröffentlichungstag und Bekanntmachung des Hinweises auf die Patenterteilung: **30.09.2015**
(21) Anmeldenummer: 13405048.3
(22) Anmeldetag: 19.04.2013
(51) Int. Cl.: E01F 9/012, B60Q 7/00

(54) **Faltsignal**
Folding sign
Signal pliant

(30) Priorität: 23.04.2012 EP 12405040
(43) Veröffentlichungstag der Anmeldung: 30.10.2013
(73) Patentinhaber: Acquaalta Schutzsysteme GmbH, 6330 Cham (CH)
(72) Erfinder: Sager, Bruno, 6330 Cham (CH)
(74) Vertreter: Wagner, Wolfgang Heribert

(56) Entgegenhaltungen:
- EP-A1- 0 218 771
- GB-A- 2 027 780
- JP-A- 6 049 816

## Beschreibung

### Technisches Gebiet

Die Erfindung betrifft ein Faltsignal zur Aufstellung vor allem an Strassen im Fall von Pannen, Polizei- oder Feuerwehreinsätzen, bei Baustellen, Signalisierungsänderungen oder dergleichen.

### Stand der Technik

Faltsignale der angesprochenen Art sind seit längerer Zeit in verschiedenen Ausführungen bekannt. So ist in CH 688 167 A5 ein Faltsignal beschrieben, das aus einem dreibeinigen Ständer und daran befestigten Folien, welche Si.gnale tragen, besteht. Dieses Faltsignal ist leicht, aber wegen der biegsamen Folien wenig stabil. Insbesondere kann es durch stärkeren Wind leicht umgeworfen werden.

Aus DE 31 24 339 A1 ist ein Faltsignal von ähnlicher Form bekannt, welches aus dreieckigen Platten aus steifem Material aufgebaut ist. Die Platten sind an den Kanten drehbar verbunden und auch längs mittiger Mantelfaltlinien faltbar, sodass das Faltsignal im Prinzip klein zusammengefaltet werden kann, doch ist dies ziemlich zeitraubend. Zur Verbesserung der Standfestigkeit bei Wind sind an den Platten Metalleinlagen zur Beschwerung angebracht. Wegen der fixen Beschwerung ist das Gesamtgewicht eher hoch.

Ein weiteres Faltsignal ist aus WO 92/21 822 A1 bekannt. Es weist einen nach unten ausfaltbaren, aber im übrigen steifen Boden auf, was ein Zusammenlegen in einen flächigen Zustand erlaubt. Aber die Gesamthöhe des zusammengelegten Faltsignals ist wegen des nach unten ausgefalteten Bodens gross, sodass es viel Platz braucht und nicht bequem getragen werden kann.

Ein gattungsgemässes Faltsignal ist schliesslich aus GB 2 207 780 A bekannt. Hier sind gemäss einer Ausführungsform, bei der das Faltsignal eine dreiseitige Pyramide bildet, ein Boden sowie eine dritte Mantelplatte jeweils längs einer mittigen Faltlinie faltbar und können so beide zwischen eine erste und eine zweite Mantelplatte eingefaltet werden, indem der Boden mittels einer Zugstange angehoben wird. Die Faltbewegung der dritten Mantelplatte tritt aber nicht zwangsläufig ein und es ist möglich, dass sie die Faltbewegung nicht mitmacht oder sich sogar an der Faltlinie nach aussen ausbuchtet, was einen direkten Eingriff erforderlich macht und so das Zusammenfalten des Faltsignals erschwert. Damit beim Zusammenlegen keine Kollision der dritten Mantelplatte mit dem nach oben einfaltbaren Boden auftritt, muss sie an der Unterseite ziemlich weit ausgeschnitten sein.

### Darstellung der Erfindung

Der Erfindung liegt die Aufgabe zugrunde, ein gattungsgemässes Faltsignal anzugeben, das leicht und sicher zusammengefaltet werden kann.

Beim erfindungsgemässen Faltsignal gemäss Anspruch 1 ist die faltbare Mantelplatte so mit dem Boden verbunden, dass ein Einfalten des Bodens ein Einfalten der Mantelplatte zwingend nach sich zieht. Das Zusammenfalten des Faltsignals ist daher grundsätzlich durch einen einzigen Handgriff möglich. Eine Behinderung oder Hemmung des Faltvorgangs, etwa durch Ausbuchtung der Mantelplatte nach der falschen Seite, kann nicht eintreten.

### Kurze Beschreibung der Zeichnungen

Im folgenden wird die Erfindung anhand von Figuren, welche lediglich Ausführungsbeispiele darstellen, näher erläutert. Es zeigen
- Fig. 1a: schematisch ein erfindungsgemässes Faltsignal gemäss einer ersten Ausführungsform in einsatzbereitem Zustand, schräg von vorn,
- Fig. 1b: das Faltsignal von Fig. 1a, von unten,
- Fig. 2a: das erfindungsgemässe Faltsignal von Fig. 1a, b in teilweise gefaltetem Zustand, schräg von vorn,
- Fig. 2b: das Faltsignal im in Fig. 2a gezeigten Zustand, von unten,
- Fig. 3: eine erste Ausbildung des erfindungsgemässen Faltsignals gemäss der ersten Ausführungsform,
- Fig. 4: eine zweite Ausbildung des erfindungsgemässen Faltsignals gemäss der ersten Ausführungsform,
- Fig. 5: einen Schnitt durch eine Seitenkante des erfindungsgemässen Faltsignals gemäss der ersten oder zweiten Ausbildung,
- Fig. 6: einen Schnitt durch eine Seitenkante des erfindungsgemässen Faltsignals gemäss der zweiten Ausbildung,
- Fig. 7a: schematisch ein erfindungsgemässes Faltsignal gemäss einer zweiten Ausführungsform in einsatzbereitem Zustand, schräg von vorn,
- Fig. 7b: das Faltsignal von Fig. 7a, von unten,
- Fig. 8a: das erfindungsgemässe Faltsignal von Fig. 7a, b in teilweise gefaltetem Zustand, von vorn,
- Fig. 8b: das Faltsignal im in Fig. 8a gezeigten Zustand, von unten,
- Fig. 9: eine Ausbildung des erfindungsgemässen Faltsignals gemäss der zweiten Ausführungsform,
- Fig. 10a: schematisch ein erfindungsgemässes Faltsignal gemäss einer dritten Ausführungsform in einsatzbereitem Zustand, schräg von vorn,
- Fig. 10b: das Faltsignal von Fig. 10a, von unten,
- Fig. 11a: das erfindungsgemässe Faltsignal von Fig. 10a, b in gefaltetem Zustand, von vorn,
- Fig. 11b: das Faltsignal im gefalteten Zustand gemäss Fig. 11a, von unten.

### Wege zur Ausführung der Erfindung

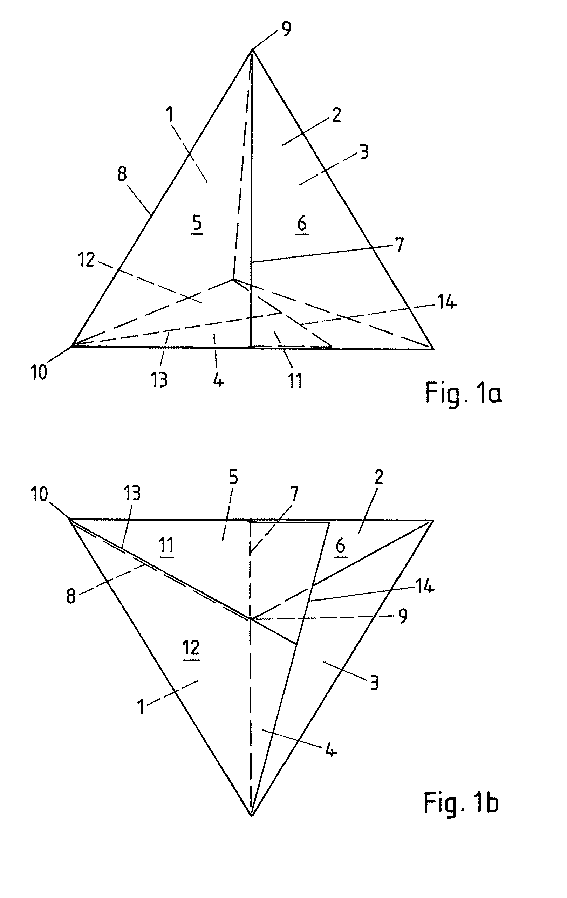

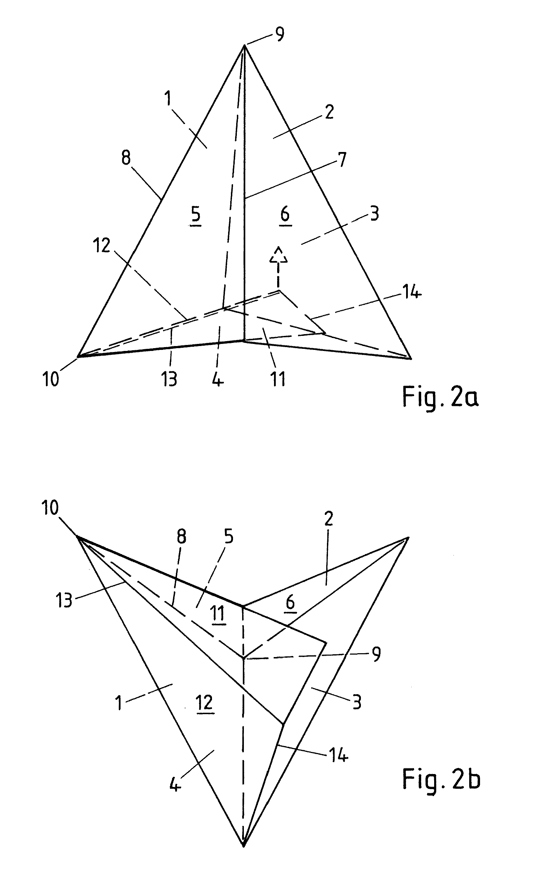

Bei der in Fig. 1a, b und 2a,b dargestellten ersten Ausführungsform besteht das erfindungsgemässe Faltsignal, das im wesentlichen die Form einer dreiseitigen Pyramide, insbesondere eines Tetraeders hat, im wesentlichen aus einer ersten Mantelplatte 1, einer zweiten Mantelplatte 2, einer dritten Mantelplatte 3 und einem Boden 4. Die Mantelplatten 1, 2, 3 haben jeweils die Form eines gleichschenkligen, z.B. gleichseitigen Dreiecks. Die erste Mantelplatte 1 und die dritte Mantelplatte 3 sind durchgehend steif ausgebildet. Die zweite Mantelplatte 2 dagegen ist einfaltbar. Sie besteht aus einer ersten Teilplatte 5 und einer zweiten Teilplatte 6, die jeweils durchgehend steif ausgebildet und längs einer mittig zwischen ihren Seitenrändern zu ihrem unteren Rand laufenden Mantelfaltlinie 7 drehbar oder beschränkt drehbar miteinander verbunden sind, derart, dass ihre Aussenseiten gegeneinander geklappt werden können.

Die erste Mantelplatte 1 und die zweite Mantelplatte 2 sind längs benachbarter Seitenränder derart drehbar miteinander verbunden, dass die Innenseite der ersten Teilplatte 5 gegen die Innenseite der ersten Mantelplatte 1 geklappt werden kann. Die besagten Seitenränder bilden dort also eine erste Seitenkante 8, welche durch eine Spitze 9 und einen ersten Eckpunkt 10 läuft, der am unteren Ende der Seitenkante 8 im Schnittpunkt zwischen einem unteren Rand der ersten Mantelplatte 1 und einem unteren Rand der zweiten Mantelplatte 2 liegt. Benachbarte Seitenränder der zweiten Mantelplatte 2, genauer der zweiten Teilplatte 6 und der dritten Mantelplatte 3 sind ebenfalls drehbar miteinander verbunden, derart, dass ihre Innenseiten gegeneinander geklappt werden können und bilden eine von der Spitze 9 ausgehende weitere Seitenkante, desgleichen benachbarte Seitenränder der ersten Mantelplatte 1 und der dritten Mantelplatte 3.

Der Boden 4 ist ebenfalls einfaltbar. Dazu besteht er aus einem ersten Teilboden 11 und einem zweiten Teilboden 12, die jeweils durchgehend steif ausgebildet und längs einer Bodenfaltlinie 13 drehbar miteinander verbunden sind, derart, dass ihre Aussenflächen gegeneinander geklappt werden können. Der erste Teilboden 11 ist längs eines vom ersten Eckpunkt 10 ausgehenden Teils eines Seitenrandes mit einem unteren Rand der ersten Teilplatte 5 der zweiten Mantelplatte 2 drehbar verbunden. Ein anschliessender Teil des besagten Seitenrandes folgt einem Teil eines unteren Randes der anschliessenden zweiten Teilplatte 6, ist jedoch nicht mit ihr verbunden. Ein dem ersten Eckpunkt 10 gegenüberliegender Gegenrand 14 des Bodens 4 ist frei.

Aus dem in Fig. 1a, b dargestellten einsatzbereiten Zustand kann das Faltsignal in einen gefalteten Zustand übergeführt werden, in dem es klein, insbesondere sehr flach ist. Es braucht dann wenig Raum und kann bequem gelagert und transportiert werden. Wie das Faltsignal kurz nach Beginn dieser Umstellung aussieht, ist in Fig. 2a,b gezeigt. Die Umstellung kann ausschliesslich durch Anheben der Mitte des Bodens 4 (Pfeil in Fig. 2a) bewirkt werden. Dadurch werden der erste Teilboden 11 und der zweite Teilboden 12 gegeneinander gefaltet. Der erste Teilboden 11 zieht dabei die erste Teilplatte 5 der zweiten Mantelplatte 2 nach innen, sodass ihre Innenseite gegen die der ersten Mantelplatte 1 geklappt wird, gleichzeitig wird die Aussenseite der zweiten Teilplatte 6 gegen die der ersten Teilplatte 5 geklappt und die Innenseite der dritten Mantelplatte 3 gegen die Innenseite der zweiten Teilplatte 6 und der ersten Mantelplatte 1.

Im gefalteten Zustand ist dann der Boden 4 zwischen die erste Mantelplatte 1 und die erste Teilplatte 5 und die zweite Mantelplatte 2 zwischen die erste Mantelplatte 1 und die dritte Mantelplatte 3 eingefaltet. Die erste Mantelplatte 1, die dritte Mantelplatte 3, die erste Teilplatte 5 und die zweite Teilplatte 6 der zweiten Mantelplatte 2 sowie der erste Teilboden 11 und der zweite Teilboden 12 sind alle parallel zueinander. Das Faltsignal benötigt so sehr wenig Platz, seine Abmessungen gehen, von der Dicke, die der Dicke von sechs Platten entspricht, abgesehen, über die einer einzelnen Mantelplatte nicht hinaus. Die Umstellung ist so einfach wie möglich, es genügt eine einzige Bewegung nach oben, für die, wie weiter unten erläutert wird, ein Zugelement vorgesehen sein kann, sodass sie mit einer Hand ausgeführt werden kann.

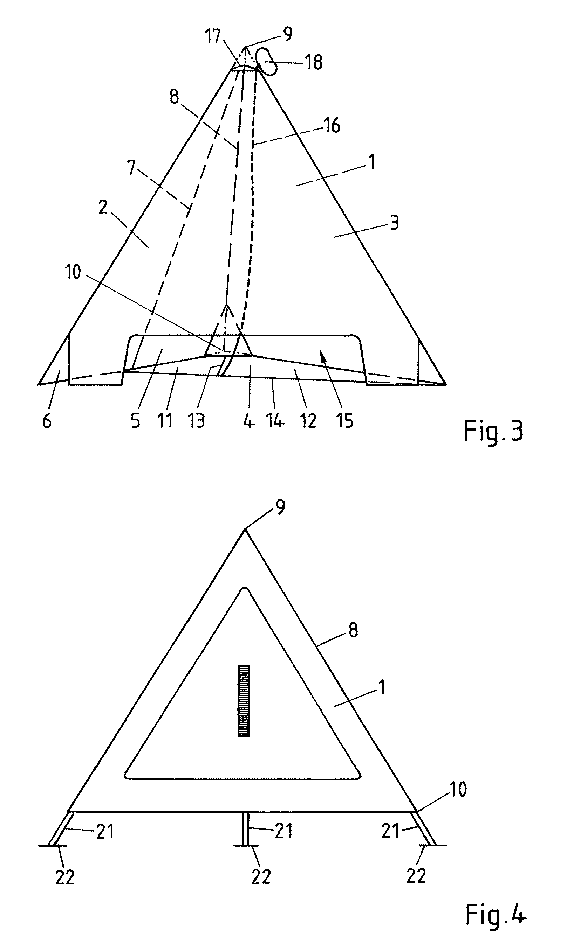

Eine erste Ausbildung eines Faltsignals gemäss der ersten Ausführungsform, d.h. eine Umsetzung ihres oben geschilderten Prinzips, ist Fig. 3 zu entnehmen. Das Faltsignal ist im wesentlichen tetraedrisch, allerdings ist die Spitze 9 abgeschnitten, desgleichen der erste Eckpunkt 10 und die beiden weiteren Eckpunkte, wobei die Schnittebene waagrecht bzw. jeweils senkrecht verläuft. Die Mantelplatten 1, 2, 3 weisen dadurch jeweils die Form eines Trapezes auf, an dessen unterem Rand ein rechteckiger Fussstreifen anschliesst. Aus der dritten Mantelplatte 3 ist ausserdem eine von ihrem unteren Rand ausgehende Ausnehmung 15 aus besagtem Fussstreifen ausgeschnitten, durch welche das Innere des Faltsignals zugänglich ist und insbesondere der Boden 4 mit Ballast, z.B. Metallgegenständen oder Pflastersteinen, beschwert werden kann, was die Standfestigkeit vor allem bei Wind wesentlich verbessert. Ein als flexibles Zugelement 16, z.B. ein Seil oder Band, ausgebildetes Betätigungselement greift im Bereich der Stelle an, an der die Bodenfaltlinie 13 auf den Gegenrand 14 trifft. Es ist durch eine Öffnung 17, welche durch das Abschneiden der Spitze 9 hergestellt wurde, nach aussen geführt, wo es einen Handgriff 18 trägt, der etwas grösser als die Öffnung 17 ist. Die Länge des Zugelements 16 ist so bemessen, dass es im einsatzbereiten Zustand des Faltsignals bei am Rand der Öffnung 17 anliegendem Griff 18 nahezu straff ist. Dadurch kann der Boden 4 höchstens geringfügig durchhängen und ein Ausfalten desselben nach unten ist nicht möglich. Alternativ können an der Bodenfaltlinie 13 auch zwischen den Teilböden 11, 12 wirksame Anschläge vorgesehen sein, die ein solches Ausfalten nach unten begrenzen oder verhindern.

Durch Ziehen am Handgriff 18 wird der Boden 4 angehoben und das Faltsignal wie oben erläutert in den gefalteten Zustand übergeführt. Es kann im gleichen Zug auch angehoben und weggetragen werden. Das Faltsignal kann leicht im gefalteten Zustand mittels eines an den unteren Rändern der Mantelplatten 1, 3 angreifenden, z.B. durch Klettverbindung fixierten Bandes verriegelt werden. Statt dessen oder zusätzlich kann auch ein Klemmteil am Zugelement 16 eingesetzt werden, dessen Durchmesser grösser ist als die Öffnung 17 im gefalteten Zustand, die dann die Form eines Schlitzes hat, und das am Zugelement 16 nach unten geschoben wird, bis es an den Rand der besagten Öffnung stösst. Es kann aber auch genügen, einen Knoten in das Zugelement 16 zu machen, sodass auf ein Klemmteil verzichtet werden kann.

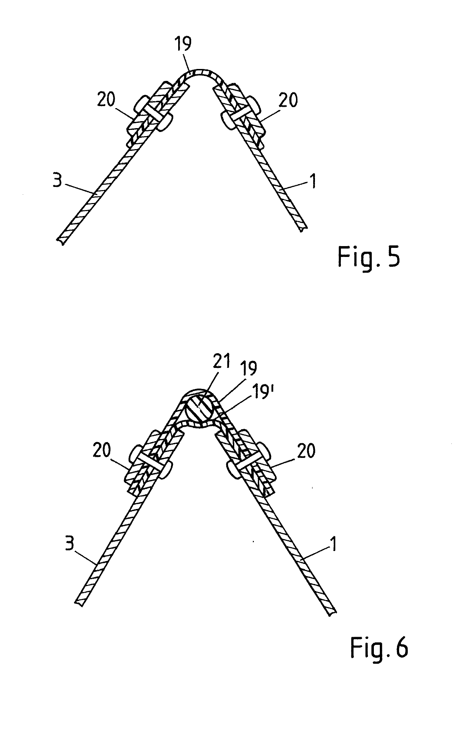

Die Mantelplatten, Teilplatten und Teilböden können jeweils durch ein Scharnier drehbar verbunden sein, welches, wie in Fig. 5 am Beispiel der Mantelplatten 1, 3 dargestellt, von einem flexiblen Scharnierstreifen 19 gebildet wird, welcher jeweils zwischen der Mantelplatte 1; 3 und einer Halteplatte 20 geklemmt ist. Die Halteplatte 20, z.B. aus Metall, kann als Haltestreifen ausgebildet sein, der sich an der Aussenseite der Mantelplatte 1; 3 längs ihres Randes erstreckt und mit ihr vernietet oder verschraubt ist. So ist eine zuverlässige flexible Verbindung zwischen den Mantelplatten 1, 3 gewährleistet. Da der Scharnierstreifen 19 die Seitenränder der Mantelplatten 1, 3 verdeckt, ist die Seitenkante verhältnismässig stumpf, was einen möglichen Aufprall entschärft. Die übrigen Verbindungen zwischen den Mantelplatten 1, 2, 3, ebenfalls die Verbindungen zwischen den Mantelplatten 1, 2 und dem Boden 4 sowie zwischen den Teilplatten 5, 6 der zweiten Mantelplatte 2 und zwischen den Teilböden 11, 12 können, wie gesagt, gleich aufgebaut sein.

Es ist natürlich auch möglich, den Scharnierstreifen 19 und den Haltestreifen jeweils an der Innenseite der Mantelplatte usw. anzuordnen oder sowohl an der Innenseite als auch an der Aussenseite einen Scharnierstreifen und einen Haltestreifen vorzusehen. Eine weitere Möglichkeit besteht darin, den Scharnierstreifen, sei er aussen oder innen angeordnet, mit den Mantelplatten usw. zu verkleben und lediglich erforderlichenfalls an einigen Punkten, vor allem an den Enden der Seitenkante, Unterkante oder Faltlinie Halteplatten vorzusehen, die dann auch quadratisch oder rund sein können.

Eine zweite Ausbildung eines Faltsignals gemäss der ersten Ausführungsform ist in schematischer Form in Fig. 4 dargestellt. Hier sind die Mantelplatten 1, 2, 3 dreieckförmig. Sie können allerdings auch trapezförmig sein, d.h. die Spitze 9 kann wiederum zur Herstellung einer Öffnung, welche dem Herausführen eines Zugelements dient, abgeschnitten sein. Längs der Seitenkanten oder jedenfalls längs unterer Abschnitte derselben sind Stützen 21 eingezogen, welche z.B. aus glas- oder kohlefaserverstärktem Kunststoff bestehen können. Die Stützen 21 können bis auf Fussplatten 22 eingeschoben und auch verschieden weit ausgefahren werden, wobei sie entweder durch Reibschluss oder durch eine formschlüssige Arretierung jeweils in verschiedenen Positionen festgehalten werden können. Auf diese Weise können Gefälle und Bodenunebenheiten ausgeglichen werden.

Die Verbindung der Mantelplatten 1, 3 usw. an den Seitenkanten kann, wie in Fig. 6 gezeigt, durch zwei parallele Scharnierstreifen 19, 19' hergestellt werden und die Stütze 21 kann dann jeweils zwischen denselben eingeschoben sein. Die Stützen 21 können jedoch auch jeweils direkt an einer der Mantelplatten geführt sein.

Die Mantelplatten 1, 2, 3, Teilplatten 5, 6 und Teilböden 11, 12 können aus Plexiglas oder Polycarbonat oder einem anderen Kunststoff oder auch aus Metall, insbesondere Aluminium bestehen oder als Verbundplatten mit einer Kunststoffschicht zwischen zwei Aluminiumschichten ausgebildet sein. In letzterem Fall können die Scharniere durch streifenförmige, z.B. ausgefräste Aussparungen in den Aluminiumschichten hergestellt sein, sodass dort nur die flexible Kunststoffschicht übrig ist. Als Kunststoff eignet sich in diesem Fall Polypropylen wegen seiner Biegsamkeit und Resistenz gegen Ermüdungsbrüche besonders gut. An der Aussenseite sind vorzugsweise alle Mantelplatten 1, 2, 3 mit einer reflektierenden Folie beklebt, welche verschiedene oder auch gleiche Verkehrszeichen trägt, z.B. das in Fig. 4 gezeigte. Dank der Steifheit der Platten können die Folien nach ihren optischen Eigenschaften gewählt werden, insbesondere können solche mit sehr hoher Reflexion eingesetzt werden.

Es sind verschiedene Abwandlungen der oben beschriebenen Ausführungsform möglich. Eine Abwandlungsmöglichkeit besteht darin, für den Boden ein flexibles Material zu verwenden. Dies ist bei allen vorstehend und beschriebenen Ausführungen möglich. Auch in diesem Fall kann ein Zugelement vorgesehen sein, das an einer von den Seitenrändern beabstandeten Stelle am Boden angreift.

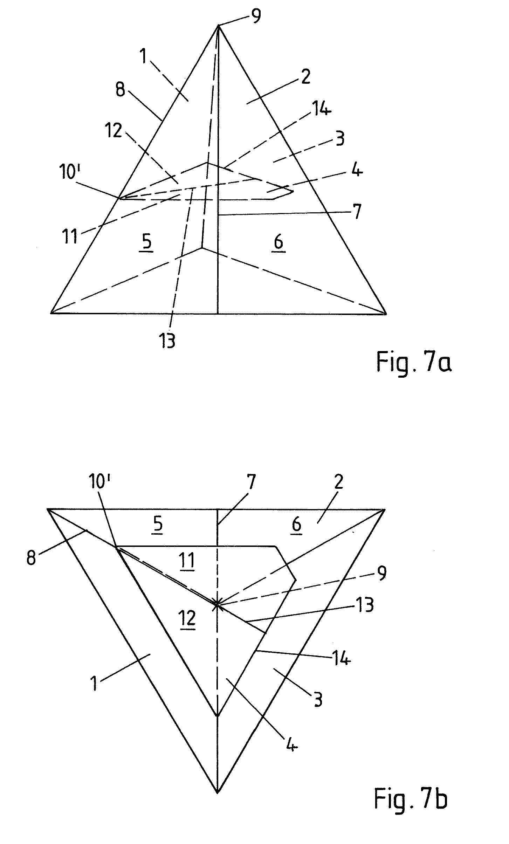

Eine zweite Ausführungsform ist in den Figuren 7a,b, 8a,b und 9 dargestellt. Sie entspricht in ihrer geometrischen Konfiguration weitgehend der ersten Ausführungsform, auf deren Beschreibung für diesbezügliche Einzelheiten verwiesen wird und kann auch auf analoge Weise umgesetzt werden. Der Unterschied zur ersten Ausführungsform liegt vor allem darin, dass der Boden 4 als Zwischenboden ausgebildet ist, der von den unteren Rändern der Mantelplatten, also vom unteren Ende des Faltsignals beabstandet, gegen die Spitze 9 hin verschoben ist. Ein erster Seitenrand des Bodens 4 ist dann längs einer von einem Eckpunkt 10', der hier oberhalb der unteren Ränder der Mantelplatten 1, 2, d.h. von ihrem Schnittpunkt gegen die Spitze 9 hin verschoben an der Seitenkante 8 liegt, ausgehenden Strecke mit der ersten Mantelplatte 1 drehbar verbunden und ein zweiter Seitenrand in gleicher Weise längs einer weiteren vom besagten Eckpunkt 10' an der Seitenkante 8 ausgehenden Strecke mit der ersten Teilplatte 5 der zweiten Mantelplatte 2. Er ist wiederum in zwei steife Teilböden 11, 12 geteilt, die längs einer mittig zwischen dem ersten Seitenrand und dem zweiten Seitenrand verlaufenden Bodenfaltline 13 drehbar miteinander verbunden sind. Vorzugsweise liegt der Boden 4 in einer Ebene, die die Seitenkante 8 und die übrigen Seitenkanten in gleichen Abständen von der Spitze 9 schneidet, parallel zu einer von den unteren Rändern der Mantelplatten 1, 2, und 3 bestimmten Ebene.

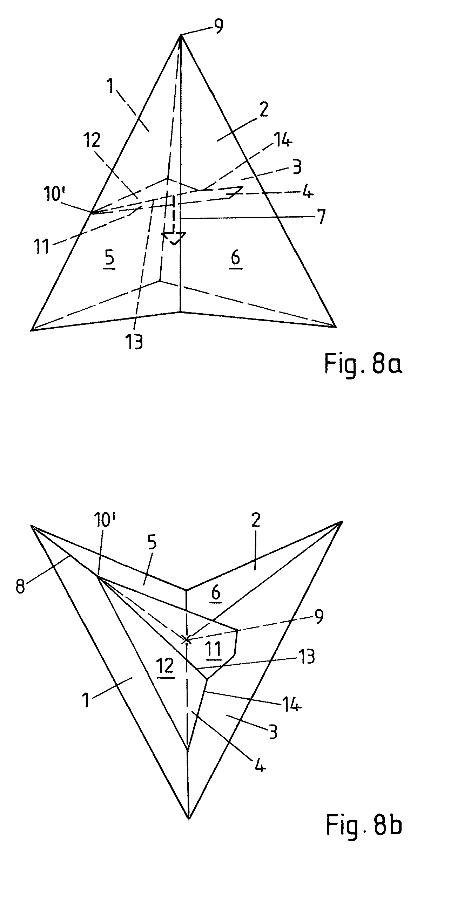

Die Anordnung des Bodens 4 oberhalb der unteren Seitenränder der Mantelplatten 1, 2 und 3 ermöglicht es, denselben zum Zusammenfalten des Faltsignals nach unten zu falten (Pfeil in Fig. 8a), sodass die Innenseiten der Teilböden 11, 12 gegeneinander geklappt werden. Vorzugsweise ist er in einem solchen Abstand von den besagten unteren Rändern angeordnet, dass er bei zusammengefaltetem Faltsignal nicht über die Mantelplatten vorsteht. Faltung des Bodens 4 nach unten entschärft Kollisionsprobleme, sodass der Boden weniger ausgeschnitten sein muss und im Einsatz bessere Stabilität gewährleistet.

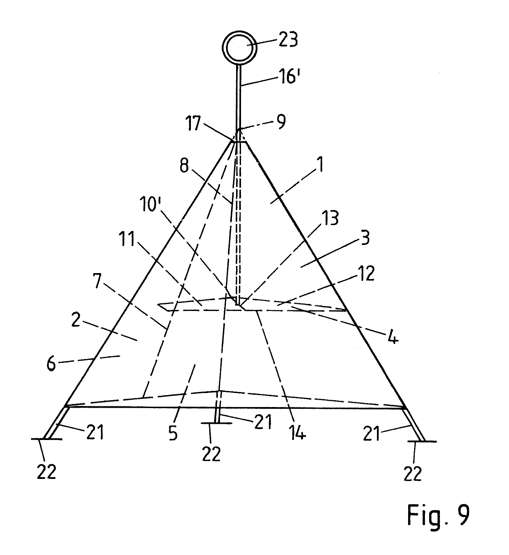

Die in Fig. 9 dargestellte Ausbildung des Faltsignals entspricht sonst weitgehend der in Fig. 4 dargestellten, auf deren Beschreibung für diesbezügliche Einzelheiten verwiesen wird. Das Betätigungselement ist vorzugsweise steif ausgebildet, insbesondere als Stab 16', dessen unteres Ende im Bereich der Bodenfaltlinie 13, vorzugsweise an einem senkrecht unterhalb der Spitze 9 liegenden Bodenmittelpunkt am Boden 4 angreift und der durch die Oeffnung 17 geführt ist. Sein oberes Ende ragt im einsatzbereiten Zustand des Faltsignals über die Spitze 9 hinaus und kann etwa wie dargestellt eine Lampe 23, z.B. ein Blinklicht, tragen oder auch ein Schild, einen Haken zur Befestigung eines Kordons oder anderes. Er kann in seiner Position z.B. durch ein nach Lösen einer Verriegelung oder mit grösserem Kraftaufwand längs des Stabes 16' verschiebbares Fixierteil, das grösser ist als die Oeffnung 17, z.B. ein Klemmteil, festgehalten werden. Alternativ oder zusätzlich kann eine beim einsatzbereiten Faltsignal zwischen den Teilböden 11, 12 wirksame Schnappverriegelung o.dgl. vorgesehen sein. Ein Einfalten des Bodens 4 nach oben kann durch einen geeigneten Anschlag am Stab 16' oder einen zwischen den Teilböden 11, 12 wirksamen Anschlag verhindert werden.

Zum Zusammenfalten des Faltsignals wird der Stab 16' nach unten gestossen, sodass sich der Boden 4 nach unten ausfaltet, wodurch, ganz wie für die erste Ausführungsform beschrieben, die erste Teilplatte 5 der zweiten Mantelplatte 2 durch den ersten Teilboden 11 nach innen gezogen und so ein Zusammenfalten des Faltsignals bewirkt wird. Gegebenenfalls kann das Verriegelungsteil vorgängig gelöst oder verschoben werden oder, vor allem wenn es ein elastisches Klemmteil ist, sich beim Niederstossen des Stabes 16', von den Rändern der Oeffnung 17 zurückgehalten, längs desselben verschieben.

Die Länge des Stabes 16' kann so gewählt sein, dass bei zusammengefaltetem Faltsignal sein oberes Ende knapp aus der Oeffnung 17 ragt und gegebenfalls ein dort befestigtes Teil wie die Lampe 23 knapp oberhalb derselben liegt, sodass das Faltsignal im gefalteten Zustand äusserst kompakt ist und keine weit vorstehenden Teile oder Anhängsel aufweist. Insbesondere wenn an der Unterseite des Bodens 4 ein Haken oder eine Oese zum Anhängen eines Gewichtes vorgesehen wird, kann das Faltsignal auch beschwert werden.

Auch hier sind verschiedene Abwandlungen wie z.B. die Verwendung eines Bodens aus flexiblem Material möglich.

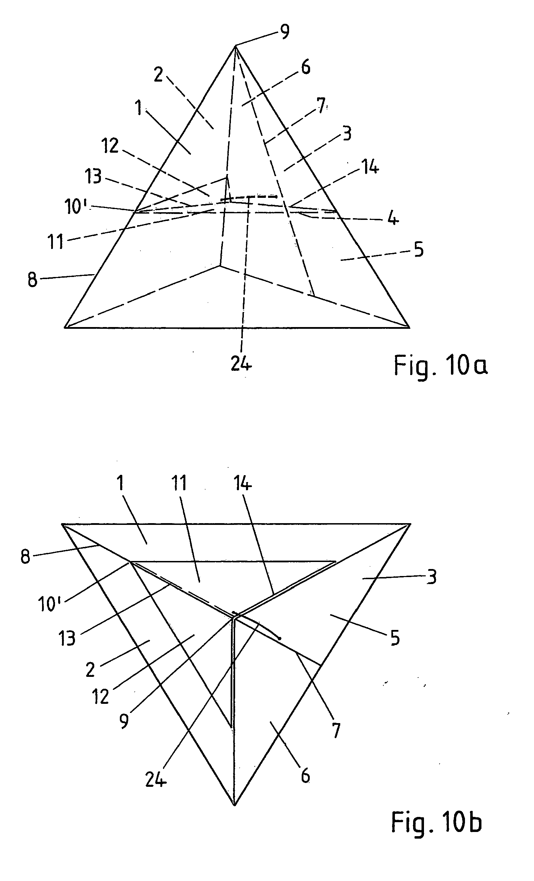

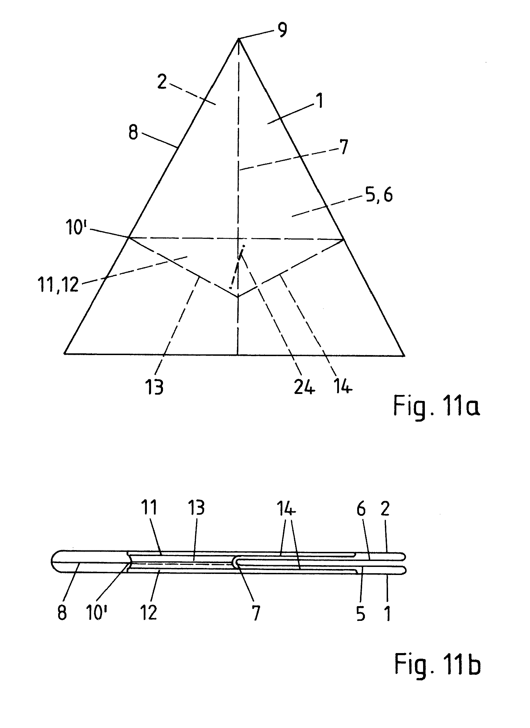

Fig. 10a,b, 11a,b zeigen eine dritte grundsätzliche Ausführungsform. Während bei den schon beschriebenen Ausführungsformen das Einfalten der einfaltbaren Mantelplatte dadurch erzwungen wird, dass eine ihrer Teilplatten mit einem der Teilböden drehbar verbunden ist, sodass sie beim Einfalten des Bodens nach innen gezogen wird, liegt bei der dritten Ausführungsform die einfaltbare Mantelplatte dem freien Rand des Bodens gegenüber. Es sind aber andere Mittel vorgesehen, welche bewirken, dass bei einer Einfaltung des Bodens die einfaltbare Mantelplatte ebenfalls eingefaltet wird. Im übrigen jedoch entspricht die dritte Ausführungsform der ersten und der zweiten, sodass im folgenden nicht alle Einzelheiten nochmals beschrieben werden.

Das Faltsignal umfasst wiederum drei Mantelplatten 1, 2 und 3, von denen die Mantelplatten 1, 2 steif ausgebildet und längs einer ersten Seitenkante 8 drehbar miteinander verbunden sind. Die dritte Mantelplatte 3 ist einfaltbar ausgebildet und besteht aus einer ersten Teilplatte 5, welche mit der ersten Mantelplatte 1 längs einer weiteren Seitenkante drehbar verbunden ist und einer zweiten Teilplatte 6, welche mit der zweiten Mantelplatte 2 längs einer weiteren Seitenkante drehbar verbunden ist. Die drei Seitenkanten treffen in einer Spitze 9 zusammen. Die Teilplatten 5, 6 sind längs einer mittigen Mantelfaltlinie 7 ebenfalls drehbar miteinander verbunden, derart, dass ihre Aussenseiten gegeneinander klappbar sind.

Der Boden 4 ist wiederum als auf mittlerer Höhe angeordneter, die Seitenkante 8 in einem ersten Eckpunkt 10' schneidender Zwischenboden ausgebildet, der in einer Ebene liegt, die zur durch die unteren Ränder der Mantelplatten 1, 2, 3 definierten Ebene parallel, aber gegen die Spitze 9 hin versetzt ist. Er besteht aus einem ersten Teilboden 11, der mit der ersten Mantelplatte 1 drehbar verbunden ist und einem zweiten Teilboden 12, der mit der zweiten Mantelplatte 2 drehbar verbunden ist. Die Teilböden 11, 12 sind miteinander um eine mittige Bodenfaltlinie 13 drehbar verbunden, welche vom Eckpunkt 10' ausgeht und zur Mitte des freien Gegenrandes 14 des Bodens 4 läuft, also in der selben, auch durch die Seitenkante 8 laufenden senkrechten Ebene liegt wie die Mantelfaltlinie 7.

Der freie Gegenrand 14 des Bodens 4 springt bis zum senkrecht unter der Spitze 9 liegenden Mittelpunkt ein, damit die Einfaltung des Bodens 4 und der einfaltbaren Mantelplatte 3 nicht behindert ist. Ein Verbindungselement, das z.B. als leicht elastisches Seil oder Band 24 ausgebildet sein kann und dessen eines Ende in der Nähe der Mantelfaltlinie 7 etwa auf der Höhe des Bodens 4 an der einfaltbaren Mantelplatte 3 und dessen anderes Ende in der Nähe des Schnittpunkts der Bodenfaltlinie 13 mit dem Gegenrand 14 am Boden 4 angreift, sorgt dafür, dass beim Falten des Faltsignals die Teilplatten 5, 6 nach innen, gegen den ersten Eckpunkt 10' gezogen werden, wie weiter unten näher erläutert wird.

Das Faltsignal gemäss der dritten Ausführungsform kann etwa in ähnlicher Weise umgesetzt sein, wie das in Fig. 9 für die zweite Ausführungsform gezeigt ist. Die Faltung des Faltsignals erfolgt wiederum dadurch, dass der Boden 4 im Bereich der Bodenfaltlinie 13 durch ein geeignetes Betätigungselement, z.B. einen durch eine Öffnung an der Spitze 9 ragenden Stab 16', nach unten gedrückt wird. Dadurch werden die Innenseiten der Teilböden 11, 12 gegeneinander geklappt. Dank der Verbindung der Teilböden 11, 12 mit den steifen Mantelplatten 1, 2 werden dabei auch diese gegeneinander gezogen. Damit die Teilplatten 5, 6 der einfaltbaren Mantelplatte 3 nicht an der Mantelfaltlinie 7 nach aussen gedrückt werden und die Faltung sperren, ist das Band 24 vorgesehen, das im einsatzbereiten Zustand des Faltsignals straff, vorzugsweise leicht gespannt ist, sodass bei Beginn der Faltbewegung des Bodens 4 sogleich ein nach innen gerichteter Zug auf den mittleren, der Mantelfaltlinie 7 benachbarten Bereich der einfaltbaren Mantelplatte 3 ausgeübt wird.

Statt eines Bandes oder Seils kann auch ein anderes, z.B. stabartiges Verbindungselement, eingesetzt werden, vorausgesetzt, dass genügend Spiel vorhanden ist, dass die Faltbewegung des Bodens 4 und der Mantelplatte 3 nicht behindert werden. Das Verbindungselement kann statt wie in den Figuren dargestellt an einem der Teilböden 11, 12 und einer der Teilplatten 5, 6 auch jeweils an beiden angreifen, der Angriffspunkt an der Mantelplatte 3 kann auch etwas höher liegen als der Boden 4 usw.. Es musst mindestens zu Beginn der Einfaltbewegung des Bodens 4 eine Wirkung auf die einfaltbare Mantelplatte 3 vermitteln, welche eine entsprechende Einfaltbewegung der letzteren erzwingt. Wenn die Einfaltbewegung der einfaltbaren Mantelplatte 3 begonnen hat, genügt im weiteren die Einwirkung der steifen Mantelplatten 1, 2 auf dieselbe, um ihre Einfaltung sicherzustellen.

Auch hier sind verschiedene Abweichungen möglich. So kann der Boden auch statt nach unten nach oben einfaltbar sein. In diesem Fall kann das Betätigungselement als Zugelement 16 ausgebildet sein. Der Boden kann auch an den unteren Enden der Mantelplatten angeordnet sein, in welchem Fall er bevorzugt nach oben einfaltbar ausgebildet ist.

### Bezugszeichenliste

- 1: erste Mantelplatte
- 2: zweite Mantelplatte
- 3: dritte Mantelplatte
- 4: Boden
- 5: erste Teilplatte
- 6: zweite Teilplatte
- 7: Mantelfaltlinie
- 8: erste Seitenkante
- 9: Spitze
- 10, 10': erster Eckpunkt
- 11: erster Teilboden
- 12: zweiter Teilboden
- 13: Bodenfaltlinie
- 14: Gegenrand
- 15: Ausnehmung
- 16: Zugelement
- 16': Stab
- 17: Öffnung
- 18: Handgriff
- 19, 19': Scharnierstreifen
- 20: Halteplatte
- 21: Stütze
- 22: Fussplatte
- 23: Lampe
- 24: Band

## Patentansprüche

1. Pyramidenförmiges Faltsignal, mit mindestens einer steifen ersten Mantelplatte (1) und mit zwei weiteren Mantelplatten (2, 3), nämlich einer zweiten Mantelplatte (2), welche seitlich an die an die erste Mantelplatte (1) anschliesst, derart, dass sie längs benachbarter Seitenränder drehbar miteinander verbunden sind, sodass sie dort eine durch eine Spitze (9) und einen ersten Eckpunkt (10, 10') laufende erste Seitenkante (8) bilden, und einer dritten Mantelplatte (3), welche längs benachbarter Seitenränder mit der ersten Mantelplatte (1) und der zweiten Mantelplatte (2) jeweils drehbar verbunden ist, sodass sie dort jeweils eine durch die Spitze (9) laufende weitere Seitenkante bilden, wobei die eine weitere Mantelplatte steif ist, während die andere weitere Mantelplatte einfaltbar ist, indem sie eine an ihren ersten Seitenrand anschliessende steife erste Teilplatte (5) und eine an ihren zweiten Seitenrand anschliessende steife zweite Teilplatte (6) umfasst, welche längs einer zwischen ihren Seitenrändern gegen die Spitze (9) verlaufenden Mantelfaltlinie (7) der Mantelplatte derart drehbar miteinander verbunden sind, dass eine Aussenseite der zweiten Teilplatte (6) gegen eine Aussenseite der ersten Teilplatte (5) klappbar ist, sowie mit einem Boden (4) mit einem ersten Seitenrand, welcher längs einer vom ersten Eckpunkt (10, 10') ausgehenden Strecke mit der ersten Mantelplatte (1) drehbar verbunden ist und einem zweiten Seitenrand, welcher längs einer ebenfalls vom ersten Eckpunkt (10, 10') ausgehenden Strecke mit der zweiten Mantelplatte (2) drehbar verbunden ist, während ein dem ersten Eckpunkt (10, 10') gegenüberliegender Gegenrand (14) frei ist, derart, dass der Boden (4) zwischen die erste Mantelplatte (1) und die zweite Mantelplatte (2) einfaltbar ist, **dadurch gekennzeichnet, dass** die faltbare weitere Mantelplatte derart mit dem Boden (4) wirkverbunden ist, dass ein Einfalten des Bodens (4) ein Einfalten der faltbaren Mantelplatte zwischen die erste Mantelplatte (1) und die steife weitere Mantelplatte bewirkt.

2. Pyramidenförmiges Faltsignal nach Anspruch 1, **dadurch gekennzeichnet, dass** die zweite Mantelplatte (2) einfaltbar ausgebildet ist, wobei die erste Teilplatte (5) an die erste Seitenkante (8) anschliesst, während die dritte Mantelplatte (3) steif ist.

3. Faltsignal nach Anspruch 2, **dadurch gekennzeichnet, dass** der Boden (4) einen ersten steifen Teilboden (11) umfasst, welcher längs des zweiten Seitenrandes des Bodens (4) mit der ersten Teilplatte (5) drehbar verbunden, aber von der zweiten Teilplatte (6) frei ist und einen längs einer mittig zwischen dem ersten Seitenrand und dem zweiten Seitenrand des Bodens (4) verlaufenden Bodenfaltlinie (13) mit dem ersten Teilboden (11) drehbar verbundenen zweiten Teilboden (12), welcher längs des ersten Seitenrandes mit der ersten Mantelplatte (1) drehbar verbunden ist.

4. Pyramidenförmiges Faltsignal nach Anspruch 1, **dadurch gekennzeichnet, dass** die zweite Mantelplatte (2) steif ist, während die dritte Mantelplatte (3) einfaltbar ist und zwischen der dritten Mantelplatte (3) und dem Boden (4) ein Verbindungselement wirksam ist, das bei einem Einfalten des Bodens einen gegen die erste Seitenkante (8) gerichteten Zug auf die dritte Mantelplatte (3) ausübt.

5. Faltsignal nach Anspruch 4, **dadurch gekennzeichnet, dass** der Boden (4) einen ersten steifen Teilboden (11) umfasst, welcher längs des ersten Seitenrandes des Bodens (4) mit der ersten Mantelplatte (1) drehbar verbunden ist sowie einen zweiten steifen Teilboden (12), welcher längs des zweiten Seitenrandes mit der zweiten Mantelplatte (2) drehbar verbunden ist und längs einer mittig zwischen dem ersten Seitenrand und dem zweiten Seitenrand des Bodens (4) verlaufenden Bodenfaltlinie (13) mit dem ersten Teilboden (11) drehbar verbunden ist.

6. Faltsignal nach einem der Ansprüche 1 bis 5, **dadurch gekennzeichnet, dass** die Mantelplatten (1, 2, 3) jeweils eine Grundform aufweisen, welche ein gleichschenkliges Dreieck oder Trapez umfasst.

7. Faltsignal nach einem der Ansprüche 1 bis 6, **dadurch gekennzeichnet, dass** der erste Eckpunkt (10) im Schnittpunkt eines unteren Randes der ersten Mantelplatte (1) und eines unteren Randes der zweiten Mantelplatte (2) liegt.

8. Faltsignal nach einem der Ansprüche 1 bis 7, **dadurch gekennzeichnet, dass** der Boden (4) als Zwischenboden ausgebildet ist, indem der erste Eckpunkt (10') vom unteren Rand der ersten Mantelplatte (1) und vom unteren Rand der zweiten Mantelplatte (2) gegen die Spitze (9) hin verschoben ist.

9. Faltsignal nach Anspruch 8, **dadurch gekennzeichnet, dass** der Boden (4) nach unten zwischen die erste Mantelplatte (1) und die zweite Mantelplatte (2) einfaltbar ist.

10. Faltsignal nach Anspruch 9, **dadurch gekennzeichnet, dass** der Boden (4) im eingefalteten Zustand nicht über die unteren Ränder der ersten Mantelplatte (1), der zweiten Mantelplatte (2) und der dritten Mantelplatte (3) vorsteht.

11. Faltsignal nach einem der Ansprüche 1 bis 10, **dadurch gekennzeichnet, dass** es im Bereich der Spitze (9) eine Öffnung (17) aufweist sowie ein Betätigungselement, welches an mindestens einem von den Seitenrändern beabstandeten Punkt des Bodens (4) angreift und durch die Öffnung (17) nach aussen geführt ist.

12. Faltsignal nach Anspruch 11, **dadurch gekennzeichnet, dass** das Betätigungselement als Stab (16') ausgebildet ist.

13. Faltsignal nach einem der Ansprüche 1 bis 12, **dadurch gekennzeichnet, dass** drehbare Verbindungen zwischen zwei Platten jeweils durch ein Scharnier hergestellt sind, welches mindesten einen Scharnierstreifen (19) aus biegsamem Material umfasst.

14. Faltsignal nach Anspruch 13, **dadurch gekennzeichnet, dass** der Scharnierstreifen (19) jeweils zwei Randstreifen aufweist, deren jeder zwischen einer der Platten und einer sich längs mindestens eines Teils des Randes erstreckenden und dort mit der Platte verschraubten oder vernieteten Halteplatte (20) aus festem Material geklemmt ist.

15. Faltsignal nach einem der Ansprüche 1 bis 14, **dadurch gekennzeichnet, dass** es stabförmige Stützen (21) umfasst, welche sich längs mindestens eines Teils der Seitenkanten erstrecken und mindestens in einem einsatzbereiten Zustand des Faltsignals unten über den Boden (4) vorstehen.

16. Faltsignal nach Anspruch 15, **dadurch gekennzeichnet, dass** die Stützen (21) längs der Seitenkanten zwischen einer eingeschobenen Position, in der sie nicht wesentlich über den Boden (4) hinausragen, und einer ausgefahrenen Position verstellbar sind.

17. Faltsignal nach Anspruch 15 oder 16, **dadurch gekennzeichnet, dass** die Stützen (21) in mehreren Zwischenpositionen arretierbar sind.

18. Faltsignal nach Anspruch 13 oder 14 und einem der Ansprüche 15 bis 17, **dadurch gekennzeichnet, dass** an den Seitenkanten jeweils zwei Scharnierstreifen (19, 19') vorgesehen sind und die Stützen (21) als Stangen ausgebildet sind mit mindestens einem zwischen den Scharnierstreifen (19, 19') liegenden Abschnitt.

19. Faltsignal nach einem der Ansprüche 1 bis 18, **dadurch gekennzeichnet, dass** die Mantelplatten (1, 2, 3) aus Plexiglas oder Polycarbonat bestehen.

20. Faltsignal nach Anspruch 19, **dadurch gekennzeichnet, dass** die Mantelplatten (1, 2, 3) jeweils als Verbundplatte mit einer zwischen zwei Aluminiumschichten liegenden Kunststoffschicht ausgebildet sind, wobei die Kunststoffschicht aus Polypropylen besteht.

## Claims

1. Pyramid-shaped folding signal having at least one rigid first shell plate (1) and two additional shell plates (2, 3), i.e. a second shell plate (2) laterally following the first shell plate (1) in such a way that they are rotatably connected along adjacent lateral borders, in such a way that they form a first lateral edge (8) there that passes through a tip (9) and a first corner point (10, 10'), and a third shell plate (3) that is rotatably connected with the first shell plate (1) and the second shell plate (2), respectively, along adjacent lateral borders, in such a way that they respectively form another lateral edge that passes through the tip (9), wherein the one additional shell plate is rigid, while the other additional shell plate is inwardly foldable by containing a first rigid partial plate (5) following the first lateral border, and a second rigid partial plate (6) following its second lateral border, the two partial plates being rotatably connected along a shell folding line (7) of the shell plate that extends between their lateral borders towards the tip (9), in such a way that an outer face of the second partial plate (6) is pivotable against an outer face of the first partial plate (5), as well as having a bottom (4) with a first lateral border that is rotatably connected to the first shell plate (1) along a path originating from the first corner point (10, 10'), and a second lateral border that is rotatably connected to the second shell plate (2) along a path also originating from the first corner point (10, 10'), while a counter border (14) opposite the first corner point (10, 10') is free, in such a way that the bottom (4) between the first shell plate (1) and the second shell plate (2) is inwardly foldable, **characterised in that** the additional foldable shell plate is operatively connected with the bottom (4) in such a way that the folding of the bottom (4) causes the folding of the foldable shell plate between the first shell plate (1) and the rigid additional shell plate.

2. Pyramid-shaped folding signal according to claim 1, **characterised in that** the second shell plate (2) is configured so as to be inwardly foldable, wherein the first partial plate (5) follows the first lateral edge (8), while the third shell plate (3) is rigid.

3. Folding signal according to claim 2, **characterised in that** the bottom (4) comprises a first rigid partial bottom (11) that is rotatably connected to the first partial plate (5) along the second lateral border of the bottom (4), but free from the second partial plate (6), as well as a second partial bottom (12) that is rotatably connected to the first partial bottom (11) along a bottom folding line (13) extending centrally between the first lateral border and the second lateral border of the bottom (4), the second partial bottom being rotatably connected to the first shell plate (1) along the first lateral border.

4. Pyramid-shaped folding signal according to claim 1, **characterised in that** the second shell plate (2) is rigid, while the third shell plate (3) is inwardly foldable, and **in that** a connecting element is operative between the third shell plate (3) and the bottom (4), the connecting element applying a pulling force on the third shell plate (3) that is directed against the first lateral edge (8) when the bottom is inwardly folded.

5. Folding signal according to claim 4, **characterised in that** the bottom (4) comprises a first rigid partial bottom (11) that is rotatably connected to the first shell plate (1) along the first lateral border of the bottom (4), as well as a second rigid partial bottom (12) that is rotatably connected to the second shell plate (2) along the second lateral border, and is rotatably connected with the first partial bottom (11) along a bottom folding line (13) extending centrally between the first lateral border and the second lateral border of the bottom (4).

6. Folding signal according to any one of claims 1 to 5, **characterised in that** the shell plates (1, 2, 3) each have a base form comprising an equilateral triangle or a trapezoid.

7. Folding signal according to any one of claims 1 to 6, **characterised in that** the first corner point (10) is located at the intersection point of a lower border of the first shell plate (1) and a lower border of the second shell plate (2).

8. Folding signal according to any one of claims 1 to 7, **characterised in that** the bottom (4) is configured as an intermediate bottom, by displacing the first corner point (10') from the lower border of the first shell plate (1) and from the lower border of the second shell plate (2) towards the tip (9).

9. Folding signal according to claim 8, **characterised in that** the bottom (4) can be folded downwardly between the first shell plate (1) and the second shell plate (2).

10. Folding signal according to claim 9, **characterised in that** in its inwardly folded state the bottom (4) does not project over the lower borders of the first shell plate (1), the second shell plate (2) and the third shell plate (3).

11. Folding signal according to any one of claims 1 to 10, **characterised in that** it has an opening (17) in the area of the tip (9), as well as an actuating member that applies at least at one point of the bottom (4) spaced apart from the lateral borders, and that is led to the outside through the opening (17).

12. Folding signal according to claim 11, **characterised in that** the actuating member is configured as a rod (16').

13. Folding signal according to any one of claims 1 to 12, **characterised in that** rotatable connections between two plates are in each case produced by a hinge comprising at least one hinge strip (19) made of a flexible material.

14. Folding signal according to claim 13, **characterised in that** the hinge strip (19) has in each case two border strips that are each clamped between one of the plates and a holding plate (20) made of a rigid material that extends at least along a part of the border and is screwed or riveted to the plate there.

15. Folding signal according to any one of claims 1 to 14, **characterised in that** it comprises rod-shaped supports (21) that extend along at least a part of the lateral edges and project downwardly beyond the bottom (4) at least in a ready-to-use state of the folding signal.

16. Folding signal according to claim 15, **characterised in that** the supports (21) are adjustable along the lateral edges between a retracted position in which they do not project substantially beyond the bottom (4), and an advanced position.

17. Folding signal according to claim 15 or 16, **characterised in that** the supports (21) are lockable in several intermediate positions.

18. Folding signal according to claim 13 or 14 and one of claims 15 to 17, **characterised in that** two hinge strips (19, 19') are provided in each case on the lateral edges, and the supports (21) are configured as rods having at least one portion located between the hinge strips (19, 19').

19. Folding signal according to any one of claims 1 to 18, **characterised in that** the shell plates (1, 2, 3) are made of acrylic glass or polycarbonate.

20. Folding signal according to claim 19, **characterised in that** the shell plates (1, 2, 3) are each configured as a compound plate having a plastic layer interposed between two aluminum layers, wherein the plastic layer consists of polypropylene.

## Revendications

1. Signal pliant en forme de pyramide, avec au moins une première plaque d'enveloppe rigide (1) et avec deux plaques d'enveloppe (2, 3) additionnelles, notamment une deuxième plaque d'enveloppe (2) se rattachant latéralement à la première plaque d'enveloppe (1) de telle manière qu'elles sont reliées de façon rotative le long des bords latéraux adjacents, et qu'elles forment ici une première arête latérale (8) passant à travers une pointe (9) et un premier sommet (10, 10'), et une troisième plaque d'enveloppe (3) respectivement reliée de façon rotative avec la première plaque d'enveloppe (1) et la deuxième plaque d'enveloppe (2) le long des bords latéraux adjacents, de telle manière qu'elles en chaque cas forment ici une autre arête latérale passant à travers la pointe (9), dans lequel l'une plaque d'enveloppe additionnelle est rigide, alors que l'autre plaque d'enveloppe additionnelle est pliable vers l'intérieur, par le fait qu'elle comprend une première plaque partielle (5) rigide se rattachant à son premier bord latéral, et une deuxième plaque partielle (6) rigide se rattachant à son deuxième bord latéral, les plaques partielles étant reliées l'une avec l'autre de façon rotative le long d'une ligne de pliage d'enveloppe (7) de la plaque d'enveloppe qui s'étend entre ses bords latéraux vers la pointe (9), de telle manière qu'une face extérieure de la deuxième plaque partielle (6) est pivotable vers une face extérieure de la première plaque partielle (5), et avec un fond (4) avec un premier bord latéral relié de façon rotative avec la première plaque d'enveloppe (1) le long d'une section partant du premier sommet (10, 10'), et un deuxième bord latéral relié de façon rotative avec la deuxième plaque d'enveloppe (2) le long d'une section aussi partant du premier sommet (10, 10'), alors qu'un contre-bord (14) opposé au premier sommet (10, 10') est libre, de telle manière que le fond (4) est pliable vers l'intérieur entre la première plaque d'enveloppe (1) et la deuxième plaque d'enveloppe (2), **caractérisé en ce que** la plaque d'enveloppe additionnelle pliable est reliée avec le fond (4) de façon opérationnelle, de telle manière que le pliage du fond (4) vers l'intérieur effectue le pliage vers l'intérieur de la plaque d'enveloppe pliable entre la première plaque d'enveloppe (1) et la plaque d'enveloppe additionnelle rigide.

2. Signal pliant en forme de pyramide selon la revendication 1, **caractérisé en ce que** la deuxième plaque d'enveloppe (2) est configurée de façon pliable vers l'intérieur, la première plaque partielle (5) se rattachant à la première arête latérale (8), alors que la troisième plaque d'enveloppe (3) est rigide.

3. Signal pliant selon la revendication 2, **caractérisé en ce que** le fond (4) comprend une première partie de fond (11) rigide reliée de façon rotative avec la première plaque partielle (5) le long du deuxième bord latéral du fond (4), mais libre de la deuxième plaque partielle (6), et une deuxième partie de fond (12) reliée de façon rotative avec la première partie de fond (11) le long d'une ligne de pliage du fond (13) qui s'étend au milieu entre le premier bord latéral et le deuxième bord latéral du fond (4), la deuxième partie de fond étant reliée de façon rotative avec la première plaque d'enveloppe (1) le long du premier bord latéral.

4. Signal pliant en forme de pyramide selon la revendication 1, **caractérisé en ce que** la deuxième plaque d'enveloppe (2) est rigide, alors que la troisième plaque d'enveloppe (3) est pliable vers l'intérieur, et **en ce qu'**un connecteur agit entre la troisième plaque d'enveloppe (3) et le fond (4), le connecteur exerceant une traction sur la troisième plaque d'enveloppe (3), la traction étant dirigée vers la première arête latérale (8).

5. Signal pliant selon la revendication 4, **caractérisé en ce que** le fond (4) comprend une première partie de fond (11) rigide reliée de façon rotative avec la première plaque partielle (1) le long du premier bord latéral du fond (4), et une deuxième partie de fond (12) rigide reliée de façon rotative avec la deuxième plaque d'enveloppe (2) le long du deuxième bord latéral, et reliée de façon rotative avec la première partie de fond (11) le long d'une ligne de pliage du fond (13) qui s'étend au milieu entre le premier bord latéral et le deuxième bord latéral du fond (4).

6. Signal pliant selon l'une quelconque des revendications 1 à 5, **caractérisé en ce que** chacune des plaques d'enveloppe (1, 2, 3) comprend une forme de base comprenant un triangle équilatéral ou un trapèze.

7. Signal pliant selon l'une quelconque des revendications 1 à 6, **caractérisé en ce que** le premier sommet (10) se trouve à l'intersection d'un bord inférieur de la première plaque d'enveloppe (1) et d'un bord inférieur de la deuxième plaque d'enveloppe (2).

8. Signal pliant selon l'une quelconque des revendications 1 à 7, **caractérisé en ce que** le fond (4) est configuré en tant que fond intermédiare, par le fait que le premier sommet (10') est déplacé du bord inférieur de la première plaque d'enveloppe (1) et du bord inférieur de la deuxième plaque d'enveloppe (2) vers la pointe (9).

9. Signal pliant selon la revendication 8, **caractérisé en ce que** le fond (4) peut être plié vers le bas, entre la première plaque d'enveloppe (1) et la deuxième plaque d'enveloppe (2).

10. Signal pliant selon la revendication 9, **caractérisé en ce que** le fond (4), dans l'état plié, ne déborde pas des bords inférieurs de la première plaque d'enveloppe (1), la deuxième plaque d'enveloppe (2) et la troisième plaque d'enveloppe (3).

11. Signal pliant selon l'une quelconque des revendications 1 à 10, **caractérisé en ce qu'**il présente, dans la zone de la pointe (9), une ouverture (17) et un élément d'actionnement qui agit sur au moins un point du fond (4) espacé des bords latéraux, et qui est passé vers l'extérieur à travers l'ouverture (17).

12. Signal pliant selon la revendication 11, **caractérisé en ce que** l'élément d'actionnement est configuré sous forme de tige (16').

13. Signal pliant selon l'une quelconque des revendications 1 à 12, **caractérisé en ce que** des liaisons rotatives sont prévues respectivement entre deux plaques, les liaisons comprenant au moins une bande de charnière (19) en matériau flexible.

14. Signal pliant selon la revendication 13, **caractérisé en ce que** la bande de charnière (19) respectivement présente deux bandes marginales, dont chacune est coincée entre une des plaques et une plaque de retenue (20) en matériau rigide qui s'étend le long d'au moins une partie du bord et est vissée ou rivetée avec la plaque ici.

15. Signal pliant selon l'une quelconque des revendications 1 à 14, **caractérisé en ce qu'**il comprend des supports (21) sous forme de tige qui s'étendent le long d'au moins une partie des arêtes latérales et débordent du fond (4) en dessous, au moins dans un état opérationnel du signal pliant.

16. Signal pliant selon la revendication 15, **caractérisé en ce que** les supports (21) sont déplaçables le long des arêtes latérales entre une position rentrée, dans laquelle ils ne débordent pas de manière sensible du fond (4), et une position étendue.

17. Signal pliant selon la revendication 15 ou 16, **caractérisé en ce que** les supports (21) peuvent être bloqués dans plusieurs positions intermédiaires.

18. Signal pliant selon la revendication 13 ou 14 et une des revendications 15 à 17, **caractérisé en ce que** deux bandes de charnières (19, 19') sont prévues au niveau de chaque arête latérale, et les supports (21) sont configurés sous forme de tige avec au moins une partie disposée entre les bandes de charnière (19, 19').

19. Signal pliant selon l'une quelconque des revendications 1 à 18, **caractérisé en ce que** chacune des plaques d'enveloppe (1, 2, 3) est en plexiglas ou en polycarbonate.

20. Signal pliant selon la revendication 19, **caractérisé en ce que** les plaques d'enveloppe (1, 2, 3) sont en chaque cas configurées en tant de plaque composite avec une couche de matière plastique entre deux couches d'aluminium, la couche de matière plastique étant en polypropylène.
